# EUROPEAN PATENT APPLICATION

(11) **EP 4 726 007 A1**
(43) Date of publication of application: **15.04.2026**
(21) Application number: 24819138.9
(22) Date of filing: 20.05.2024
(51) Int. Cl.: C09J 123/26, B32B 15/085, B32B 27/00, C09J 123/02

(54) **POLYOLEFIN-BASED ADHESIVE COMPOSITION**

(30) Priority: 09.06.2023 JP 2023095505
(71) Applicant: TOYOBO MC Corporation, Osaka-shi, Osaka 530-0001 (JP)
(72) Inventor: MIURA, Wataru, Otsu-shi, Shiga 520-0292 (JP); MURAKAMI, Yuuki, Otsu-shi, Shiga 520-0292 (JP); IWASHITA, Yuuji, Otsu-shi, Shiga 520-0292 (JP)
(74) Representative: Müller-Boré & Partner Patentanwälte PartG mbB
(86) International application number: PCT/JP2024/018481
(87) International publication number: WO 2024/252905

(57) **Abstract**

An object of the present invention is to provide an adhesive composition that exhibits good adhesiveness to a polyolefin resin base material and a metallic base material and good heat resistance and requires no aging. The adhesive composition according to the present invention contains a modified polyolefin (A) and an olefin-α-olefin copolymer (B), wherein the adhesive composition satisfies all of the following conditions: (1) a content of the olefin-α-olefin copolymer (B) is 15 to 85 parts by mass per 100 parts by mass of the modified polyolefin (A); (2) a weight-average molecular weight of the olefin-α-olefin copolymer (B) is 200,000 or more; (3) a melting point of the olefin-α-olefin copolymer (B) is 80°C or higher and 100°C or lower; and (4) the weight-average molecular weight of the modified polyolefin (A) ≤ the weight-average molecular weight of the olefin-α-olefin copolymer (B).

## Description

### Technical Field

The present invention relates to an adhesive composition using a modified polyolefin and an olefin-α-olefin copolymer. More specifically, the present invention relates to an adhesive composition suitable for bonding together a polyolefin resin base material and a metallic base material.

### Background Art

In the fields of outer panels of consumer electronics, materials for furniture, members for building interiors, and electric/electronic parts, many metallic parts are used. Further, plastic parts, especially polyolefin resin parts are also used in combination so as to achieve weight reduction thereof. It is conventionally difficult to bond together a highly polar metallic base material and a lowly polar polyolefin resin base material. Therefore, these base materials are conventionally bonded together by, for example, welding or using screws. On the other hand, various adhesive compositions for bonding together a metallic base material and a polyolefin resin base material have been proposed so as to promote efficiency of parts-production process. On the assumption of use in various environments, these adhesive compositions are required to exhibit higher level of resistance to severe conditions. For example, in the field of electric/electronic parts, these adhesive compositions are exposed to a high-temperature environment due to, for example, heat generation during charge and discharge. Therefore, there are demands for adhesive compositions that exhibit high adhesive strength even in both environments at about 25°C and 90°C.

As to an adhesive composition for bonding together a polyolefin resin base material and a metallic base material, for example, Patent Document 1 discloses an adhesive composition containing a polyolefin modified with an α,β-unsaturated carboxylic acid and a (meth)acrylic acid ester. Patent Document 2 discloses an adhesive composition obtained by blending an isocyanate curing agent with a polyolefin modified with an α,β-unsaturated carboxylic acid and a (meth)acrylic acid ester.

### Prior Art Documents

### Patent Documents

Patent Document 1: Japanese Patent Application Laid-Open (JP-A) No. 2020-143181
Patent Document 2: Japanese Patent No. 6673411

### Disclosure of the Invention

### Problem that the Invention is to Solve

However, in Patent Document 1, the (meth)acrylic acid ester that remains unreacted is not taken into consideration. Particularly, the (meth)acrylic acid ester with high polarity is deposited on a surface under high temperature, thereby affinity for a polyolefin resin base material is reduced. Therefore, the adhesive composition disclosed in Patent Document 1 exhibits low adhesive strength under high temperature. Further, the thermosetting adhesive composition disclosed in Patent Document 2 requires long-time aging for completing a curing reaction.

In light of the problems of such conventional techniques, the present invention has been accomplished. It is therefore an object of the present invention to provide an adhesive composition that exhibits excellent adhesiveness to a polyolefin resin base material and a metallic base material and excellent heat resistance and that requires no aging. In addition, it is also an object of the present invention to provide an adhesive composition that exhibits excellent adhesive strength even when processed under conditions of high temperature and short time by, for example, injection molding. Further, it is also an object of the present invention to provide a laminate containing a polyolefin resin base material, an adhesive layer formed of the above-described adhesive composition, and a metallic base material.

The present inventors have intensively studied so as to achieve the above problems and as a result have completed the present invention. That is, the present invention includes the following aspects.
[1] An adhesive composition containing a modified polyolefin (A) and an olefin-α-olefin copolymer (B), wherein the adhesive composition satisfies all of the following conditions (1) to (4):
   (1) a content of the olefin-α-olefin copolymer (B) is 15 to 85 parts by mass per 100 parts by mass of the modified polyolefin (A);
   (2) a weight-average molecular weight of the olefin-α-olefin copolymer (B) is 200,000 or more;
   (3) a melting point of the olefin-α-olefin copolymer (B) is 80°C or higher and 100°C or lower; and
   (4) the weight-average molecular weight of the modified polyolefin (A) ≤ the weight-average molecular weight of the olefin-α-olefin copolymer (B).
[2] The adhesive composition according to [1], wherein the weight-average molecular weight of the modified polyolefin (A) is 70,000 or more and less than 200,000.
[3] The adhesive composition according to [1] or [2], wherein the adhesive composition further contains an organic solvent (C).
[4] The adhesive composition according to [1] to [3], wherein the modified polyolefin (A) has an acid value of 2 to 50 mgKOH/g.
[5] The adhesive composition according to [1] to [4], wherein the adhesive composition is used for bonding together a polyolefin resin base material and a metallic base material.
[6] A laminate containing a polyolefin resin base material, the adhesive composition according to [1] to [5], and a metallic base material laminated in this order.

### Advantages of the Invention

The adhesive composition according to the present invention exhibits excellent adhesiveness to a polyolefin resin base material and a metallic base material. Further, the adhesive composition according to the present invention exhibits heat resistance and therefore can be used for bonding under high temperature conditions and requires no aging. Therefore, the adhesive composition according to the present invention is particularly suitable as an adhesive for bonding together a polyolefin resin base material formed by injection molding and a metallic base material.

### Brief Description of the Drawings

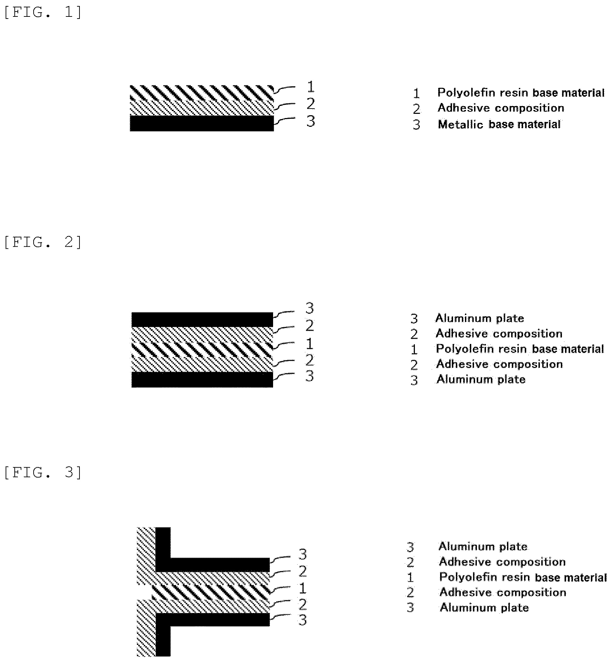

[FIG. 1] FIG. 1 is a sectional view of an example of a laminate according to the present invention.
[FIG. 2] FIG. 2 is a diagram of a test specimen for measuring adhesive strength in the present invention.
[FIG. 3] FIG. 3 is a diagram showing how adhesive strength is measured using the test specimen.

In the drawings attached hereto, scales, vertical-to-horizontal dimensional ratios, and the like are appropriately changed and exaggerated from actual ones for the sake of illustration and easy understanding.

### Explanation of Reference Number

1: Polyolefin resin base material, 2: Adhesive composition, 3: Metallic base material (Aluminum plate)

### Mode for Carrying Out the Invention

Hereinafter, the present invention is described in detail.

### <Modified polyolefin (A)>

A modified polyolefin (A) used in the present invention is not limited, but is preferably one obtained by modifying at least one selected from the group consisting of polyethylene, polypropylene, and a propylene/α-olefin copolymer. Also, the modified polyolefin (A) is more preferably obtained by modifying the polypropylene and the propylene/α-olefin copolymer and is further preferably obtained by modifying the propylene/α-olefin copolymer. Further, from the viewpoint of improving compatibility, the modified polyolefin (A) is particularly preferably one obtained by modifying a resin of the same type as an olefin-α-olefin copolymer (B) to be used. This may improve compatibility between the modified polyolefin (A) and the olefin-α-olefin copolymer (B), and therefore the adhesive composition may exhibit excellent adhesiveness.

The propylene/α-olefin copolymer is obtained by copolymerizing a propylene which is a main component with an α-olefin. Examples of the α-olefin include ethylene, 1-butene, 1-heptene, 1-octene, 4-methyl-1-pentene, and vinyl acetate. One or more of these may be used. From the viewpoint of adhesiveness and dissolution stability, a copolymer of propylene and 1-butene is particularly preferred. The mole ratio between a propylene component and an α-olefin component in the propylene/α-olefin copolymer is not limited, but the mole ratio of the propylene component is preferably 50 mol% or more, and more preferably 70 mol% or more. When the mole ratio of propylene is 50% or more, excellent adhesiveness to a polyolefin resin base material, especially a polypropylene resin base material may be exhibited.

Specific examples of modification used to obtain the modified polyolefin (A) used in the present invention include acid modification, chlorine modification, and hydroxyl group modification. Among these, acid modification is particularly preferred from the viewpoint of adhesiveness between the modified polyolefin (A) and a metallic base material and production efficiency.

The modified polyolefin (A) is preferably one obtained by acid-modifying a polyolefin with an α,β-unsaturated carboxylic acid and/or an acid anhydride thereof. Examples of the α,β-unsaturated carboxylic acid and/or the acid anhydride thereof include maleic acid, itaconic acid, citraconic acid, and acid anhydrides thereof. Among these, acid anhydrides are preferred, and maleic anhydride is more preferred. These α,β-unsaturated carboxylic acids and acid anhydrides thereof may be used alone or in combination of two or more of them.

From the viewpoint of adhesiveness to a polyolefin resin base material and a metallic base material, the acid value of the modified polyolefin (A) is preferably 2 mgKOH/g or more, more preferably 3 mgKOH/g or more, further preferably 5 mgKOH/g or more, and especially preferably 7 mgKOH/g or more. When the acid value is equal to or more than the above lower limit, adhesive force at polyolefin/metal interface may be improved, and therefore good adhesiveness to a polyolefin resin base material and a metallic base material may be achieved in both environments at 25° C and 90°C. The upper limit of the acid value is preferably 50 mgKOH/g or less, more preferably 45 mgKOH/g or less, further preferably 40 mgKOH/g or less, and especially preferably 35 mgKOH/g or less. When the acid value is equal to or less than the above upper limit, the modified polyolefin (A) may have high molecular weight and may exhibit strong cohesive force, thereby the adhesive strength of the adhesive composition may be improved. Further, production efficiency also may be improved.

The acid value of the modified polyolefin (A) can be adjusted by the amounts of an α,β-unsaturated carboxylic acid, an acid anhydride thereof, and a radical generator to be used.

The weight-average molecular weight (Mw) of the modified polyolefin (A) is preferably in the range of 70,000 or more and less than 200,000, more preferably in the range of 75,000 to 150,000, further preferably in the range of 80,000 to 130,000, and most preferably in the range of 85,000 to 105,000. When the weight-average molecular weight (Mw) is equal to or more than the above lower limit, the adhesive composition may exhibit good cohesive force, thereby excellent adhesiveness may be exhibited. On the other hand, when the weight-average molecular weight (Mw) is equal to or less than the above upper limit, the adhesive composition may exhibit excellent dissolution stability and flowability, and therefore may exhibit good handleability during bonding.

The melting point (Tm) of the modified polyolefin (A) is preferably in the range of 50°C to 130°C, more preferably in the range of 60°C to 125°C, further preferably in the range of 70°C to 120°C, and most preferably in the range of 85°C to 110°C. When the melting point (Tm) is equal to or more than the above lower limit, the resin is not melted even in a high-temperature environment, and therefore the adhesive composition may exhibit good crystal-derived cohesive force, whereby excellent adhesiveness and heat resistance may be exhibited. On the other hand, when the melting point (Tm) is equal to or less than the above upper limit, the adhesive composition may exhibit excellent dissolution stability and flowability, and therefore may exhibit good handleability during bonding.

The heat of fusion (ΔH) of the modified polyolefin (A) is preferably in the range of 5 J/g to 60 J/g, more preferably in the range of 10 J/g to 50 J/g, and further preferably in the range of 20 J/g to 40 J/g. When the heat of fusion (ΔH) is equal to or more than the above lower limit, the adhesive composition may exhibit good crystal-derived cohesive force, thereby excellent adhesiveness may be exhibited. On the other hand, when the heat of fusion (ΔH) is equal to or less than the above upper limit, the adhesive composition may exhibit excellent dissolution stability and flowability, and therefore may exhibit good handleability during bonding.

A method for producing the modified polyolefin (A) is not limited and may be, for example, a method based on a radical graft reaction (specifically, a reaction in which a radical species is generated in a polymer acting as a main chain, and an unsaturated carboxylic acid and/or an acid anhydride are/is graft-polymerized using the radical species as a polymerization starting point).

The radical generator is not limited, and examples thereof include an organic peroxide and an azonitrile. Between them, an organic peroxide is preferably used. The organic peroxide is not limited, and examples thereof include di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide. Examples of the azonitrile include azobisisobutyronitrile and azobisisopropionitrile.

The modified polyolefin (A) may be a commercially-available product, and examples thereof include "Modic" Series manufactured by Mitsubishi Chemical Corporation, "ADMER" Series and "UNISTOLE" Series manufactured by Mitsui Chemicals, Inc., "HARDLEN" Series manufactured by TOYOBO Co., Ltd., "UMEX" Series manufactured by Sanyo Chemical Industries, Ltd., and "AUROREN" Series manufactured by Nippon Paper Industries Co., Ltd.

### <Olefin-α-olefin copolymer (B)>

The olefin-α-olefin copolymer (B) used in the present invention is an unmodified random copolymer containing an α-olefin as a comonomer. The comonomer is not limited, and examples thereof include ethylene, propylene, 1-butene, 1-heptene, 1-octene, 4-methyl-1-pentene, and vinyl acetate. One or more of these may be used. Among these, 1-butene is preferred. The main component of the olefin-α-olefin copolymer (B) may be polyethylene, polypropylene, or the like. Among these, polypropylene is preferred. The main component of the olefin-α-olefin copolymer (B) refers to a component that occupies 50 mol% or more of the total amount of all the components of the copolymer. The olefin-α-olefin copolymer (B) used in the present invention is particularly preferably a propylene/α-olefin copolymer.

The propylene/α-olefin copolymer is obtained by copolymerizing a propylene which is a main component with an α-olefin. Examples of the α-olefin include ethylene, 1-butene, 1-heptene, 1-octene, 4-methyl-1-pentene, and vinyl acetate. One or more of these may be used. The mole ratio between a propylene component and an α-olefin component in the propylene/α-olefin copolymer is not limited, but the mole ratio of the propylene component is preferably 50 mol% or more, and more preferably 70 mol% or more. When the mole ratio of propylene is 50% or more, excellent adhesiveness to a polyolefin resin base material, especially a polypropylene resin base material may be exhibited.

The weight-average molecular weight (Mw) of the olefin-α-olefin copolymer (B) is 200,000 or more, preferably in the range of 200,000 to 1,300,000, more preferably in the range of 300,000 to 1,200,000, further preferably in the range of 400,000 to 1,100,000, and most preferably in the range of 500,000 to 1,000,000. When the weight-average molecular weight (Mw) is equal to or more than the above lower limit, the adhesive composition may exhibit good cohesive force, thereby excellent adhesiveness may be exhibited. On the other hand, when the weight-average molecular weight (Mw) is equal to or less than the above upper limit, the adhesive composition may exhibit improved solubility in an organic solvent, and therefore good dissolution stability may be achieved in the adhesive composition.

The melting point (Tm) of the olefin-α-olefin copolymer (B) is in the range of 80°C to 100°C, and preferably in the range of 80°C to 90°C. When the melting point (Tm) is equal to or more than the above lower limit, the adhesive composition may exhibit good crystal-derived cohesive force, thereby excellent adhesiveness may be exhibited. On the other hand, when the melting point (Tm) is equal to or less than the above upper limit, the adhesive composition may exhibit excellent dissolution stability and flowability, and therefore may exhibit good handleability during bonding.

The heat of fusion (ΔH) of the olefin-α-olefin copolymer (B) is preferably in the range of 20 J/g to 70 J/g, more preferably in the range of 25 J/g to 60 J/g, and further preferably in the range of 30 J/g to 50 J/g. When the heat of fusion (ΔH) is equal to or more than the above lower limit, the adhesive composition may exhibit good crystal-derived cohesive force, thereby excellent adhesiveness may be exhibited. On the other hand, when the heat of fusion (ΔH) is equal to or less than the above upper limit, the adhesive composition may exhibit excellent dissolution stability and flowability, and therefore may exhibit good handleability during bonding.

### <Adhesive composition>

An adhesive composition according to the present invention contains the above-described modified polyolefin (A) and the above-described olefin-α-olefin copolymer (B).

The adhesive composition according to the present invention contains 15 to 85 parts by mass of the olefin-α-olefin copolymer (B) per 100 parts by mass of the modified polyolefin (A). The content of the olefin-α-olefin copolymer (B) is preferably 20 parts by mass or more, further preferably 25 parts by mass or more, and especially preferably 30 parts by mass or more, per 100 parts by mass of the modified polyolefin (A). When the content of the olefin-α-olefin copolymer (B) is equal to or more than the above lower limit, excellent cohesive force is achieved by the high-molecular-weight component of the adhesive composition, and therefore the adhesive composition exhibits excellent adhesiveness. On the other hand, the content of the olefin-α-olefin copolymer (B) is preferably 80 parts by mass or less, further preferably 75 parts by mass or less, and especially preferably 70 parts by mass or less, per 100 parts by mass of the modified polyolefin (A). When the content of the olefin-α-olefin copolymer (B) is equal to or less than the above upper limit, the modified polyolefin (A) exhibits the effect of improving adhesive force at olefin/metal interface and thereby makes it possible to exhibit excellent adhesiveness even when the resin is softened in a high-temperature environment. Further, the adhesive composition exhibits excellent dissolution stability.

In the adhesive composition according to the present invention, the weight-average molecular weight of the modified polyolefin (A) and the weight-average molecular weight of the olefin-α-olefin copolymer (B) satisfy a relationship of the weight-average molecular weight of (A) ≤ the weight-average molecular weight of (B). Preferably, a relationship of the weight-average molecular weight of (A) < the weight-average molecular weight of (B) is satisfied. When the above formula is satisfied, the adhesive composition exhibits both the effect of improving adhesiveness to metal base material by the modified component and the effect of improving adhesive strength by the cohesive force of the high-molecular-weight component.

When the weight-average molecular weight of the modified polyolefin (A) and the weight-average molecular weight of the olefin-α-olefin copolymer (B) satisfy the relationship of weight-average molecular weight of (A) < weight-average molecular weight of (B), the difference in weight-average molecular weight between (A) and (B) is preferably 10,000 or more, more preferably 100,000 or more, further preferably 200,000 or more, and most preferably 300,000 or more. Also, the difference in weight-average molecular weight between (A) and (B) is preferably 500,000 or less, more preferably 480,000 or less, and further preferably 450,000 or less.

The sum of the weight-average molecular weight of the modified polyolefin (A) and the weight-average molecular weight of the olefin-α-olefin copolymer (B) is preferably 450,000 or more, more preferably 500,000 or more, and further preferably 550,000 or more. Also, the sum of the weight-average molecular weight of the modified polyolefin (A) and the weight-average molecular weight of the olefin-α-olefin copolymer (B) is preferably 700,000 or less, more preferably 650,000 or less, and further preferably 620,000 or less.

The adhesive composition according to the present invention may contain, in addition to the modified polyolefin (A) and the olefin-α-olefin copolymer (B), various additives such as a tackifier, a plasticizer, a flame retarder, a pigment, and an anti-blocking agent to such an extent that the performance of the adhesive composition according to the present invention is not impaired.

The adhesive composition according to the present invention can form an adhesive layer that exhibits high adhesive force without being blended a curing agent. Therefore, it is preferred that the adhesive composition according to the present invention contains substantially no curing agent.

The content of the curing agent in the adhesive composition according to the present invention is preferably less than 1 part by mass, more preferably less than 0.5 part, further preferably less than 0.1 part, per 100 parts by mass of the solid content of the adhesive composition. Most preferably, the adhesive composition according to the present invention contains no curing agent. If the content of the curing agent is large, economic efficiency is poor. In addition, the adhesive composition may be inferior in terms of followability to base materials due to a self-condensation reaction between molecules of the curing agent and may be inferior in terms of long-term storage stability.

The curing agent herein refers to a conventionally-known curing agent that reacts with a modified polyolefin resin so as to form a cross-linking structure, and examples thereof include an isocyanate compound, an epoxy compound, a carbodiimide compound, and an oxazoline compound.

The adhesive composition according to the present invention may further contain an organic solvent (C) to such an extent that the performance of the adhesive composition according to the present invention is not impaired. The organic solvent is not limited as long as it can dissolve or disperse the modified polyolefin (A) and the olefin-α-olefin copolymer (B). Examples thereof include lowly polar solvents such as an aliphatic hydrocarbon and an alicyclic hydrocarbon; and highly polar solvents such as an alcohol-based solvent, an ether-based solvent, a ketone-based solvent, and an ester-based solvent. From the viewpoint of storage stability, a lowly polar solvent and a highly polar solvent are preferably used in combination. The content ratio between the highly polar solvent and the lowly polar solvent is preferably 50 to 3/50 to 97 (mass ratio), more preferably 45 to 5/55 to 95 (mass ratio), and further preferably 40 to 10/60 to 90 (mass ratio).

Examples of the aliphatic hydrocarbon include hexane, heptane, octane, and decane. Examples of the alicyclic hydrocarbon include cyclohexane, cyclohexene, methylcyclohexane, and ethylcyclohexane. Examples of the alcohol-based solvent include methanol, ethanol, isopropyl alcohol, butanol, pentanol, hexanol, and propanediol. Examples of the ether-based solvent include ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, and tetraethylene glycol mono-n-butyl ether. Examples of the ketone-based solvent include acetone, methyl isobutyl ketone, methyl ethyl ketone, pentanone, hexanone, cyclohexanone, isophorone, and acetophenone. Examples of the ester-based solvent include methyl acetate, ethyl acetate, butyl acetate, methyl propionate, and butyl formate.

Among the above organic solvents, an alicyclic hydrocarbon such as methylcyclohexane is preferred as a lowly polar solvent, and a ketone-based solvent such as methyl ethyl ketone is preferred as a highly polar solvent. Particularly, a mixed solvent of methylcyclohexane and methyl ethyl ketone is more preferred. The content of the organic solvent (C) is preferably 80 to 2000 parts by mass, more preferably 90 to 1600 parts, further preferably 100 to 1200 parts, and especially preferably 110 to 900 parts, per 100 parts by mass of the total amount of the (A) component and the (B) component. When the content of the organic solvent (C) is within the above range, an excellent solution state is likely to be achieved.

### <Laminate>

A laminate according to the present invention contains a polyolefin resin base material, the adhesive composition according to the present invention, and a metallic base material laminated in this order.

Regarding a laminating method, a conventionally-known injection molding technique may be used. For example, the laminate can be obtained in the following manner. Firstly, the adhesive composition is applied onto the surface of a metallic base material with an appropriate application means such as a roll coater or a bar coater. Next, after drying, a polyolefin resin is laminated on a layer of the adhesive composition (adhesive layer) formed on the surface of the metallic base material by injection molding. The thickness of the adhesive layer formed of the adhesive composition is not limited, and it is preferably 0.5 to 30 µm, more preferably 1.0 to 25 µm, and further preferably 1.0 to 20 µm.

An example of the methods using the conventionally-known injection molding technique is a method in which a polyolefin resin is molded by injecting it into a mold in which a metallic base material is set. More specifically, when a screw-type applicator for holt-melt molding process is used, a polyolefin is thermally melted at about 160 to 280°C and injected into a mold through an injection nozzle. Then, after a lapse of a certain cooling time, a laminate can be obtained by taking it out from the mold.

The applicator for hot-melt molding process is not limited and may be, for example, ST2 manufactured by Nordson or a vertical extrusion molding machine IMC-18F9 manufactured by Imoto Machinery Co., LTD.

### <Polyolefin resin base material>

A material constituting the polyolefin resin base material may appropriately be selected from conventionally-known polyolefin resins. For example, polyethylene, polypropylene, or an ethylene-propylene copolymer can be used. Among these, polypropylene is preferably used. The thickness of the polyolefin resin base material is not limited, but is preferably 100 to 500 µm, more preferably 150 to 400 µm, and further preferably 200 to 300 µm. It should be noted that the polyolefin resin base material may contain a pigment or various additives, if necessary.

### <Metallic base material>

A material constituting the metallic base material is not limited, and examples thereof include various metals and alloys thereof such as aluminum, copper, iron and steel, chromium, zinc, duralumin, and die-casting alloys. The metallic base material can take any form such as metallic foil, rolled steel plate, panel, pipe, can, or cap. In general, aluminum is preferred from the viewpoint of processability etc. Although varying depending on the intended use, the metallic base material is generally used in the form of a sheet that has a thickness of 0.01 to 10 mm and preferably 0.02 to 5 mm. The surface of the metallic base material may previously be treated or may remain untreated. In either case, the same effect can be exhibited.

### Examples

In order to illustrate the present invention in detail, Examples will be shown below although the present invention shall not be limited at all by those Examples. Incidentally, each of the measured values mentioned in Examples was measured by the following methods. In examples and comparative examples, "parts" refers to "parts by mass", and "%" refers to "% by mass".

### (1) Measurement of weight-average molecular weight

The weight-average molecular weight in the present invention was a value measured by a gel permeation chromatograph manufactured by SHIMADZU CORPORATION (hereinafter referred to as "GPC", standard substance: polystyrene resin, mobile phase: tetrahydrofuran, column: Shodex KF-802 + KF-804L + KF-806L, column temperature: 30°C, flow rate: 1.0 ml/min, detector: RI detector).

### (2) Measurement of melting point (Tm) and Heat of fusion (ΔH)

The melting point and heat of fusion in the present invention were values determined from the top temperature and area of a melting peak measured using a differential scanning calorimeter (hereinafter referred to as "DSC", Q-2000 manufactured by TA Instruments Japan Inc.) by heating a sample from -50°C to 200°C at a temperature rise rate of 20°C/min, then cooling the sample from 200°C to -50°C at a temperature decrease rate of 20°C/min, and again heating the sample from -50°C to 200°C at a temperature rise rate of 20°C/min so as to melt the sample.

### (3) Measurement of acid value (unit: mgKOH/g)

The acid value in the present invention refers to the amount of KOH required to neutralize 1 g of a sample, and was measured in accordance with a test method specified in JIS K0070 (1992). Specifically, 1 g of a modified polyolefin was dissolved in 100 g of xylene adjusted to a temperature of 100°C, and the resulting solution was titrated at the same temperature with a 0.1 mol/L potassium hydroxide-ethanol solution [trade name "0.1 mol/L Potassium Hydroxide Ethanolic Solution", manufactured by Wako Pure Chemical Industries, Ltd.] using phenolphthalein as an indicator. The amount of potassium hydroxide required for titration at this time was converted in milligrams to calculate an acid value (mgKOH/g).

### (4) Dissolution stability

Each of the adhesive compositions prepared in Examples was dissolved in methylcyclohexane/methyl ethyl ketone = 9/1 (weight ratio) in such a manner that the resulting solution has a solid content concentration of 20% by mass. This resin solution was stored at 25°C for 2 weeks (14 days). Then, the resin solution was visually observed to determine the presence or absence of haze and evaluated according to the following criteria.
○: No haze was observed in the resin solution.
×: Haze was observed in the resin solution.

### (5) Adhesive strength

### <Production of laminate for test specimen>

A five-layer laminate consisting of aluminum plate (thickness 100 µm)/adhesive composition layer (thickness 20 µm)/polyolefin resin base material (thickness 300 µm)/adhesive composition layer (thickness 20 µm)/ aluminum plate (thickness 100 µm) was produced in the following manner. First, each of the adhesive composition prepared in Examples was dissolved in methylcyclohexane/methyl ethyl ketone = 9/1 (weight ratio) in such a manner that the resulting adhesive composition solution has a solid content concentration of 20%. Next, the adhesive composition solution was applied onto aluminum plates with an applicator at ordinary temperature in such a manner that the coating thickness of the adhesive composition after drying was 20 µm. Then, the solvent was volatilized with a hot-air drier at 120°C for 2 minutes. Then, the aluminum plates were fixed in a mold for adhesion test in such a manner that the adhesive composition layers on the aluminum plates were brought into contact with a melted polyolefin resin so as to form a 25 mm × 10 mm × thickness 300 µm polyolefin resin base material between them by molding. As to the polyolefin, polypropylene (Prime Polypro J107G manufactured by Prime Polymer Co., Ltd., MFR: 30 g/10 min) was used. Then, molding was performed by injecting the melted polyolefin resin using a vertical injection molding machine (THX5S manufactured by NISSEI PLASTIC INDUSTRIAL CO., LTD.). The molding was performed under conditions of: molding resin temperature of 240°C; molding pressure of 50 MPa; cooling time of 20 seconds; and injection speed of 30 mm/s. A molded product was taken out from the mold, whereby a five-layer laminate for an adhesive strength test specimen was obtained in which the molded polyolefin resin base material was sandwiched between aluminum plates that have an adhesive composition applied thereon (aluminum plate/adhesive composition layer/polyolefin resin base material/adhesive composition layer/aluminum plate).

### <Adhesive strength>

The adhesive strength between the aluminum plates of the five-layer laminate was measured using a tensile tester. Tensile strength was measured by a T-peel test method at an atmosphere temperature of 25°C or 90°C and a peel rate of 300 mm/min and was defined as adhesive strength. The unit of adhesive strength was N/25 mm. Adhesiveness between the polyolefin resin base material and the metallic base material was evaluated by the adhesive strength at 25°C, and heat resistance was evaluated by the adhesive strength at 90°C. The evaluations were made according to the following criteria.
○○: 30 N/25 mm or more
○: 15 N/25 mm or more and less than 30 N/25 mm
×: less than 15 N/25 mm

### Production Examples of modified polyolefin (A)

### <Production Example 1, modified polyolefin (A) PO-1>

In a 1-liter autoclave, 100 parts by mass of a propylene/1-butene copolymer ("TAFMER (registered trademark) XM7090" manufactured by Mitsui Chemicals, Inc.), 150 parts by mass of toluene and 3 parts by mass of maleic anhydride, and 1 part by mass of di-tert-butyl peroxide were placed, and they were heated to 140°C and then further stirred for 3 hours. Then, the obtained reaction liquid was cooled. Then, the reaction liquid was poured into a container containing a large amount of methyl ethyl ketone, whereby a resin was precipitated. Then, the liquid containing the resin was centrifuged to separate an acid-modified propylene/1-butene copolymer onto which maleic anhydride was graft polymerized from (poly)maleic anhydride and low-molecular weight resultants and to purify the acid-modified propylene/1-butene copolymer. Then, the resin was dried at 70°C for 5 hours under reduced pressure so as to obtain a maleic anhydride-modified propylene/1-butene copolymer (PO-1, acid value 5 mgKOH/g, weight-average molecular weight 90,000, Tm 90°C, ΔH 30 J/g) as the modified polyolefin (A).

### <Production Example 2, modified polyolefin (A) PO-2>

A maleic anhydride-modified propylene/1-butene copolymer (PO-2, acid value 5 mgKOH/g, weight-average molecular weight 90,000, Tm 80°C, ΔH 30 J/g) was obtained as the modified polyolefin (A) in the same manner as in Production Example 1 except that the propylene/1-butene copolymer ("TAFMER (registered trademark) XM7090" manufactured by Mitsui Chemicals, Inc.) used in Production Example 1 was changed to a propylene/1-butene copolymer ("TAFMER (registered trademark) XM7080" manufactured by Mitsui Chemicals, Inc.).

### <Production Example 3, modified polyolefin (A) PO-3>

A maleic anhydride-modified propylene/1-butene copolymer (PO-3, acid value 20 mgKOH/g, weight-average molecular weight 110,000, Tm 70°C, ΔH 25 J/g) was obtained as the modified polyolefin (A) in the same manner as in Production Example 1 except that the propylene/1-butene copolymer ("TAFMER (registered trademark) XM7090" manufactured by Mitsui Chemicals, Inc.) used in Production Example 1 was changed to a propylene/1-butene copolymer ("TAFMER (registered trademark) XM7070" manufactured by Mitsui Chemicals, Inc.), the amount of maleic anhydride added was changed to 16 parts by mass, and the amount of di-tert-butyl peroxide added was changed to 0.5 part by mass.

### <Production Example 4, modified polyolefin (A) PO-4>

A maleic anhydride-modified propylene/1-butene copolymer (PO-4, acid value 19 mgKOH/g, weight-average molecular weight 75,000, Tm 90°C, ΔH 25 J/g) was obtained as the modified polyolefin (A) in the same manner as in Production Example 1 except that the amount of maleic anhydride added was changed to 13 parts by mass, and the amount of di-tert-butyl peroxide added was changed to 3 parts by mass.

### <Example 1>

An adhesive composition of Example 1 (solid content concentration 20% by mass) was obtained by blending 100 parts by mass of PO-1 as the (A) component, 50 parts by mass of S-1 as the (B) component, 450 parts by mass of methylcyclohexane, and 50 parts by mass of methyl ethyl ketone. The details and evaluation results of the adhesive composition of Example 1 are shown in Table 1.

### <Examples 2 to 7 and Comparative Examples 1 to 4>

Adhesive compositions of Examples 2 to 7 and Comparative Examples 1 to 4 were obtained in the same manner as in Example 1 except that the amount of the (A) component added and the amount of the (B) component added were changed as shown in Table 1. The details and evaluation results of the adhesive compositions of these Examples are shown in Table 1. It should be noted that the amount of the organic solvent (methylcyclohexane/methyl ethyl ketone = 90/10 (mass ratio)) was adjusted in such a manner that the solid content concentration of the adhesive composition was 20% by mass.

**[Table 1]**

| | | Unit | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Modified polyolefin (A) | P0-1 | [% by mass] | 100 | 100 | 100 | | | 100 | | 100 | 100 | 100 | 100 |
| | P0-2 | | | | | 100 | | | | | | | |
| | P0-3 | | | | | | 100 | | | | | | |
| | P0-4 | | | | | | | | 100 | | | | |
| α-olefin copolymer (B) | S-1 | [% by mass] | 50 | 20 | 80 | 50 | 50 | | 50 | 10 | 100 | | |
| | S-2 | | | | | | | 50 | | | | | |
| α -olefin copolymer (others) | S-3 | | | | | | | | | | | 50 | |
| | S-4 | | | | | | | | | | | | 50 |
| Physical property value of (A) | Weight-average molecular weight | [-] | 90000 | 90000 | 90000 | 90000 | 110000 | 90000 | 75000 | 90000 | 90000 | 90000 | 90000 |
| | Melting point | [°C] | 90 | 90 | 90 | 80 | 70 | 90 | 90 | 90 | 90 | 90 | 90 |
| | Heat of fusion | [J/g] | 30 | 30 | 30 | 30 | 25 | 30 | 25 | 30 | 30 | 30 | 30 |
| Physical property value of α-olefin copolymer | Weight-average molecular weight | [-] | 520000 | 520000 | 520000 | 520000 | 520000 | 520000 | 520000 | 520000 | 520000 | 520000 | 50000 |
| | Melting point | [°C] | 80 | 80 | 80 | 80 | 80 | 90 | 80 | 80 | 80 | 70 | 65 |
| | Heat of fusion | [J/g] | 40 | 40 | 40 | 40 | 40 | 45 | 40 | 40 | 40 | 35 | 15 |
| Dissolution stability at 25°C | | [-] | ○ | ○ | ○ | ○ | ○ | ○ | ○ | ○ | × | ○ | ○ |
| Adhesive strength at 25°C | | [N/25mm] | ○○ | ○○ | ○○ | ○○ | ○○ | ○○ | ○○ | ○ | ○○ | ○○ | × |
| Adhesive strength at 90°C (Heat resistance) | | [N/25mm] | ○○ | ○ | ○ | ○ | ○ | ○○ | ○○ | × | × | × | × |

The olefin-α-olefin copolymers (B) shown in Table 1 are as follows.
S-1: "TAFMER (registered trademark) XM7080" manufactured by Mitsui Chemicals, Inc.), propylene/1-butene copolymer, weight-average molecular weight 520,000, melting point 80°C, ΔH 40 J/g
S-2: "TAFMER (registered trademark) XM7090" manufactured by Mitsui Chemicals, Inc.), propylene/1-butene copolymer, weight-average molecular weight 520,000, melting point 90°C, ΔH 45 J/g

Other olefin-α-olefin copolymers shown in Table 1 are as follows.
S-3: "TAFMER (registered trademark) XM7070" manufactured by Mitsui Chemicals, Inc.), propylene/1-butene copolymer, weight-average molecular weight 520,000, melting point 70°C, ΔH 35 J/g
S-4: "LICOCENE (registered trademark) PP1602" manufactured by Clariant, ethylene-propylene copolymer, weight-average molecular weight 50,000, melting point 65°C, ΔH 15 J/g

As can be seen from Table 1, in Examples 1 to 7, the adhesive strength at 25°C, the adhesive strength at 90°C, and the dissolution stability at 25°C are all good. On the other hand, in Comparative Example 1, the amount of the olefin-α-olefin copolymer (B) added was small. Therefore the cohesive force was weak, thus the adhesive strength at 90°C was low, and thus the heat resistance was poor. In Comparative Example 2, the amount of the olefin-α-olefin copolymer (B) added was large, and therefore adhesive force at polypropylene (polyolefin resin base material)/aluminum (metallic base material) interface was low. The adhesive strength at 25°C was high due to high cohesive force, but the adhesive strength at 90°C was low due to softening of the resin and reduced contribution of the cohesive force, and therefore heat resistance was poor. Further, dissolution stability was also deteriorated due to cohesion of the olefin-α-olefin copolymer (B). In Comparative Example 3, the melting point of the olefin-α-olefin copolymer (B) was low. Therefore, the adhesive strength at 90°C was low, and thus the heat resistance was poor. In Comparative Example 4, the weight-average molecular weight of the modified polyolefin (A) was higher than that of the olefin-α-olefin copolymer (B), and the weight-average molecular weight and melting point of the olefin-α-olefin copolymer (B) were low. Therefore, the adhesive strength at 90°C was low, and thus the heat resistance was poor.

### Industrial Applicability

The adhesive composition according to the present invention exhibits good adhesiveness to both a polyolefin resin base material and a metallic base material and also exhibits excellent heat resistance. In addition, the adhesive composition according to the present invention exhibits good adhesive strength even when processed under conditions of high temperature and short time by, for example, injection molding. Therefore, a laminate of a polyolefin resin base material and a metallic base material formed by using the adhesive composition according to the present invention can widely be used in the fields of outer panels of consumer electronics, materials for furniture, members for building interiors, and electric/electronic parts.

## Claims

1. An adhesive composition containing a modified polyolefin (A) and an olefin-α-olefin copolymer (B), wherein the adhesive composition satisfies all of the following conditions (1) to (4):
(1) a content of the olefin-α-olefin copolymer (B) is 15 to 85 parts by mass per 100 parts by mass of the modified polyolefin (A);
(2) a weight-average molecular weight of the olefin-α-olefin copolymer (B) is 200,000 or more;
(3) a melting point of the olefin-α-olefin copolymer (B) is 80°C or higher and 100°C or lower; and
(4) the weight-average molecular weight of the modified polyolefin (A) ≤ the weight-average molecular weight of the olefin-α-olefin copolymer (B).

2. The adhesive composition according to claim 1, wherein the weight-average molecular weight of the modified polyolefin (A) is 70,000 or more and less than 200,000.

3. The adhesive composition according to claim 1 or 2, wherein the adhesive composition further contains an organic solvent (C).

4. The adhesive composition according to claim 1 or 2, wherein the modified polyolefin (A) has an acid value of 2 to 50 mgKOH/g.

5. The adhesive composition according to claim 1 or 2, wherein the adhesive composition is used for bonding together a polyolefin resin base material and a metallic base material.

6. A laminate containing a polyolefin resin base material, the adhesive composition according to claim 1 or 2, and a metallic base material laminated in this order.
